# DEMANDE DE BREVET EUROPEEN

(11) **EP 1 193 109 A1**
(43) Date de publication de la demande: **03.04.2002**
(21) Numéro de dépôt: 01402097.8
(22) Date de dépôt: 02.08.2001
(51) Int. Cl.: B60M 3/00

(54) **Installation de détection de la rupture des conducteurs d'une ligne aérienne de contact pour véhicule à traction électrique**

(30) Priorité: 27.09.2000 FR 0012279
(71) Demandeur: Cynober, Simon, 92160 Antony (FR)
(72) Inventeur: Cynober, Simon, 92160 Antony (FR)
(74) Mandataire: Picard, Jean-Claude Georges

(57) **Abrégé**

L'installation comprend pour chaque section de voie à contrôler un émetteur Emv1f1 de courant alternatif moyenne ou audio fréquence relié par une de ses bornes mₑ aux fils de contact FCv1p1 et FCv1n1 de ligne d'alimentation, et deux récepteurs REv1p1 et REv1n1 reliés d'une part aux fils de contact FC à proximité d'une extrémité de la section considérée, d'autre part, par une autre borne mᵣ et une ligne de pseudo neutre N, à l'autre point de connexion dudit émetteur EM. Chaque récepteur RE est agencé pour couper l'alimentation de la section considérée en courant continu haute tension à partir de la ou des sous-stations d'alimentation correspondantes lorsque ce récepteur REv1p1 ou REv1n1 détecte la coupure du courant alternatif dans la liaison émetteur EM - fil de contact FCv1p1 (ou FCv1n1) - récepteur - pseudo neutre N. Des ponts diviseurs PDe et PDr à deux branches Dp, Dn relient respectivement l'émetteur EM ainsi que les récepteurs RE aux fils FC.

## Description

La présente invention concerne une installation pour la détection de la rupture de l'un au moins des fils de contact d'une ligne aérienne de traction électrique reliée à une alimentation en courant continu à haute tension, en particulier pour véhicule urbain à traction électrique utilisant deux fils de contact reliés respectivement aux deux polarités de l'alimentation et roulant sur pneus tel qu'un trolleybus, ou utilisant un fil de contact relié à la polarité positive de l'alimentation et roulant sur une voie ferrée tel qu'un tramway, cette ligne étant divisée en sections séparées par des isolateurs de section disposés de distance en distance sur chaque fil de contact, chacune de ces sections étant alimentée par l'une au moins d'un ensemble de sous-stations d'alimentation de la ligne aérienne de traction électrique.

Actuellement il n'existe pas d'installation commercialisée de détection de la rupture des fils de contact dans ce domaine de la technique. Les difficultés de réalisation d'une telle installation sont en effet de deux ordres : mécanique et électrique.

Dans le domaine mécanique, il y a lieu de rappeler que les fils de contact sont posés sous une tension mécanique assez élevée, de l'ordre de 120 N/mm² à une température de l'ordre de - 20°C, et qu'ils sont soumis à des variations de température ambiante de forte amplitude, de - 20 à + 40°C par exemple, températures sous lesquelles chaque fil doit rester tendu malgré la dilatation dont il est l'objet, afin d'assurer un bon contact électrique avec l'organe mobile de captage du courant. La résultante de la tension mécanique, de la dilatation et du frottement des organes de captage a tendance à provoquer un cheminement du fil, que des dispositifs connus appropriés s'efforcent de neutraliser. Dans ce contexte, il est difficile d'apprécier une variation de tension du fil, très variable selon la dilatation locale dudit fil, variation qui devrait être extrêmement rapide pour être corrélée à une rupture du fil, ou de mesurer un déplacement longitudinal du fil, représentatif d'une rupture de ce fil. Il faudrait en outre multiplier les points de détection, du fait que, sur une ligne urbaine d'une dizaine de km de longueur, par exemple, au tracé quelconque, on a simultanément des zones à l'ombre et d'autres au soleil.

Une installation électrique de détection semble plus facile à concevoir, en utilisant le principe connu et couramment utilisé dans le domaine de la traction électrique et de la signalisation ferroviaire, de l'interruption d'un courant. Dans les équipements faisant appel à la sécurité positive, il est en effet admis de corréler l'interruption d'un courant avec la rupture du conducteur électrique traversé par ce courant. Or, la continuité électrique et/ou mécanique du conducteur peut être interrompue intentionnellement, du fait de la pose de la ligne aérienne de contact par sections isolées, alimentées séparément, sans que l'on puisse pour autant invoquer la rupture d'un fil de contact. Pour le véhicule en circulation, la continuité de son alimentation est alors réalisée par un isolateur de section d'un type connu, dont la conception est adaptée à son mode de captage par perches ou pantographe.

Par ailleurs, la présence d'un feeder Fe alimentant la ligne aérienne de contact en de nombreux points est souvent prévue, pour réduire les chutes de tension en ligne. Dans ce cas, la rupture d'un fil de contact peut passer inaperçue, le courant servant au contrôle de la continuité du conducteur pouvant aisément contourner l'interruption en passant par le feeder Fe.

Devant cette complexité, les exploitants ont adopté des mesures préventives, d'abord en assurant une maintenance rigoureuse, prévenant toute rupture de la ligne aérienne de contact, ensuite en évitant que la rupture d'un fil ne se traduise par la chute de ce fil sur la chaussée, lorsque le système n'est pas en site propre. Dans ce dernier cas on a disposé deux conducteurs en parallèle par polarité, régulièrement maintenus ensemble, de manière que le fil sain puisse retenir le fil rompu et l'empêcher de tomber sur la chaussée. Mais il s'agit là d'un moyen de prévention coûteux, qui ne convient pas pour les trolleybus, du fait de la constitution de leur dispositif de captage linéaire. Lorsque le système est implanté en site propre, le fil chute généralement sur la voie de circulation. Mais la probabilité de toucher une personne ou un véhicule routier est alors très faible, du fait que la voie est réglementairement inaccessible aux personnes et aux véhicules routiers.

La chute du fil rompu sur la chaussée constitue un danger extrêmement grand. En effet, la tension nominale d'alimentation de la ligne aérienne de contact varie de 600 à 1500 V en courant continu, en milieu urbain. Bien que les deux polarités de l'alimentation soient en principe isolées, des défauts ponctuels d'isolement ne peuvent être exclus. Cette tension est donc toujours extrêmement dangereuse, si ce n'est mortelle au cas où le fil rompu, notamment celui de polarité positive, serait toujours sous tension et viendrait à toucher une personne en contact électrique avec le sol.

La présente invention a par conséquent pour but de remédier aux inconvénients indiqués ci-dessus pour détecter la rupture des fils de contact et, en commandant l'ouverture des disjoncteurs à action ultrarapide protégeant les sous-stations d'alimentation de la ligne aérienne de contact, de couper l'alimentation électrique des fils de contact dans les tous premiers instants de la rupture. La chute du fil sur la chaussée ne devrait plus, alors, présenter de danger. L'invention a en d'autres termes pour but de renforcer la sécurité d'exploitation de la ligne aérienne de contact et donc du système de transport lui-même.

Si l'on appelle :
- g l'accélération de la pesanteur, égale à 9,81 m/s²
- t le temps écoulé entre la rupture du fil et l'ouverture des disjoncteurs,
on sait que la hauteur de chute du fil pendant le temps t est : h = ½ g * t². Avec l'appareillage actuel, t sera toujours inférieur à 0,100 s, y compris pour une cascade de deux ou trois temps de réponse de relais ou d'appareils de coupure. Dans ce cas, h = 0,5 * 9,81 * 0,1² = 0,049 m, soit 5 cm. Le courant est donc coupé pratiquement avant que le fil n'ait eu le temps de tomber. Compte tenu de la hauteur de pose de la ligne aérienne de contact en milieu urbain, on peut dire que le fil rompu ne sera plus sous tension, même s'il tombait sur un véhicule routier de 3 m de haut environ, puisqu'il suffit d'une distance d'isolement inférieure à une dizaine de cm pour être assuré de la coupure du courant.

Dans le cas d'une ligne aérienne de contact bifilaire de trolleybus, une installation conforme à l'invention permettra en outre d'identifier le fil rompu.

L'invention permettra encore de réaliser des économies, en permettant de supprimer un conducteur, dans le cas du montage de deux conducteurs en parallèle par polarité. Cette dernière disposition est en effet peu efficace si la ligne aérienne de contact est arrachée par un véhicule routier.

A cet effet et conformément à une disposition essentielle de l'invention, l'installation définie au début est caractérisée en ce qu'elle comprend au moins un émetteur de courant alternatif moyenne ou audio fréquence relié par une de ses bornes aux fils ou fil de contact de ladite ligne, et au moins un récepteur relié d'une part aux fils ou fil de contact à proximité d'une extrémité de la section considérée, d'autre part, par une autre borne et une ligne de pseudo neutre, à l'autre point de connexion dudit émetteur, et en ce que chaque récepteur est agencé pour couper l'alimentation de ladite section considérée en courant continu haute tension à partir de la ou des sous-stations d'alimentation correspondantes lorsque ce récepteur détecte la coupure du courant alternatif dans la liaison émetteur - fil de contact - récepteur - pseudo neutre.

L'invention sera décrite plus bas pour ses deux applications préférentielles, que sont le trolleybus et le tramway. Il s'agit de deux systèmes de transport urbain, généralement alimentés sous une tension nominale de 600 ou 750 V courant continu, comportant au moins une partie de leur parcours non implantée en site propre. De ce fait, la chute d'un fil de contact rompu peut se produire sur la chaussée et présente un danger extrêmement grand. Chaque forme de réalisation de l'invention fait appel aux mêmes principes.

Dans le cas d'un trolleybus, l'installation sera caractérisée en ce que les émetteurs sont reliés chacun aux deux fils de contact de la ligne aérienne par l'intermédiaire de ponts diviseurs émetteurs possédant chacun deux bras reliés d'une part respectivement aux polarités positive et négative de ladite ligne aérienne et d'autre part l'un à l'autre par un point milieu constituant ladite borne, et en ce que les récepteurs sont reliés chacun aux deux fils de contact de la ligne par l'intermédiaire des deux bras de ponts diviseurs récepteurs, ces récepteurs étant reliés l'un à l'autre par un point milieu constituant ladite autre borne.

Dans le cas d'un tramway, l'installation sera caractérisée en ce que les émetteurs et récepteurs sont reliés chacun au fil de contact de la ligne par un premier bras de ponts diviseurs respectivement émetteur et récepteur, ces ponts diviseurs possédant chacun un second bras par l'intermédiaire desquels ils sont reliés à la voie ferrée, et les bras de chaque pont étant par ailleurs reliés l'un à l'autre par un point milieu constitué respectivement par lesdites bornes permettant la constitution entre elles du pseudo neutre qui les relie.

L'invention consiste dans tous les cas à créer un pseudo neutre local, pour les alimentations à courant continu, et à brancher des circuits de voie utilisés comme émetteurs et récepteurs de courant, entre ce pseudo neutre et chaque polarité de l'alimentation, à chacune des extrémités de la section de voie surveillée. La surveillance de chaque section de voie met en oeuvre un émetteur alimentant les polarités en parallèle, et un récepteur par fil de contact surveillé, soit deux récepteurs pour une ligne aérienne de contact bifilaire de trolleybus et un récepteur pour une ligne aérienne de contact unifilaire de tramway.

Le pseudo neutre local est défini entre deux points milieux, soit un point milieu à chacune des extrémités de la section de voie surveillée. Ces points milieux sont créés par des ponts diviseurs constitués de deux dipôles identiques en série.

Le circuit de voie émetteur est branché à une extrémité de ce pseudo neutre, de façon à alimenter les deux polarités en parallèle.

Chaque circuit de voie récepteur est intégré à une branche du pont diviseur dont le point milieu est connecté à l'autre extrémité du pseudo neutre. Chaque récepteur peut ainsi contrôler l'intégrité de la polarité à laquelle il est relié par l'intermédiaire d'un dipôle du pont diviseur.

Habituellement les circuits de voie sont exclusivement utilisés en signalisation ferroviaire, pour contrôler l'occupation de sections de voie, appelées cantons. Ce sont des équipements de sécurité, parfaitement adaptés à l'environnement de la traction électrique ferroviaire. Cette adaptation constitue l'un des avantages de l'invention. Pour une forme de réalisation, la manière dont les circuits de voie sont mis en oeuvre en signalisation est rappelée ci-dessous.

La section de voie à protéger, par exemple délimitée par des joints isolants, est équipée d'un émetteur à l'une de ses extrémités et d'un récepteur à l'autre extrémité, tous deux branchés entre les deux files de rails de la voie. L'émetteur engendre un courant alternatif à audiofréquence ou de moyenne fréquence qui emprunte la première file de rails, traverse le récepteur qui se trouve alimenté, emprunte la seconde file de rails et retourne à l'émetteur. Lors de l'entrée d'un train dans le canton, les deux files de rails se trouvent électriquement réunies par les nombreuses liaisons que constituent les essieux montés des véhicules (les deux roues et l'essieu qui les solidarise), ce qui a pour effet de court-circuiter le récepteur, dont le relais est désexcité et chute. C'est ce qu'on appelle le shuntage (du récepteur et de l'émetteur par voie de conséquence). Par l'intermédiaire d'une chaîne appropriée de relais, la chute du relais du récepteur a pour effet direct de mettre le signal qui protège l'entrée du canton au rouge, et de modifier l'état des signaux placés en amont, selon les règles d'exploitation propres à la signalisation concernée.

L'invention va maintenant être décrite dans plusieurs modes de réalisation donnés à titre d'exemples nullement limitatifs avec référence aux figures du dessin ci-annexé dans lequel :
- la figure 1 représente le schéma de base de l'installation, appliqué au cas d'une ligne aérienne de contact bifilaire de trolleybus alimentée en courant continu, dans le cas d'une émission dite "extrême";
- la figure 2 montre la constitution des dipôles ;
- la figure 3 est un schéma appliqué au cas d'une ligne aérienne de contact bifilaire de trolleybus alimentée en courant continu mais dans le cas d'une émission dite "intermédiaire" ;
- la figure 4 est un schéma représentant une installation conforme à l'invention appliquée à une ligne aérienne de contact monofilaire de tramway alimentée en courant continu, dans le cas d'une émission extrême;
- la figure 5 montre encore une installation conforme à l'invention appliquée à une ligne aérienne de contact monofilaire de tramway alimentée en courant continu, dans le cas d'une émission intermédiaire ;
- les figures 6a à 6d représentent schématiquement la constitution d'un sous-système d'alimentation de trolleybus ;
- les figures 7a et 7b montrent l'utilisation d'interrupteurs bipolaires normalement fermés au niveau des isolateurs de section ;
- la figure 8 montre schématiquement l'adjonction de circuits bouchons disposés en série sur le circuit de traction d'un trolleybus ;
- la figure 9 est un schéma de l'installation dans son application à la détection sur une ligne de trolleybus comprenant les deux sens de circulation, côte à côte dans la même rue, avec émission intermédiaire (fig 9g moitié gauche, fig 9d moitié droite) ; et
- la figure 10 est un schéma de l'installation dans son application à la détection sur une ligne de tramway comprenant les deux sens de circulation, côte à côte dans la même rue, avec émission extrême (fig 10g, moitié gauche, fig 10d, moitié droite).

La section surveillée de la voie 1 pour trolley comprend des isolateurs de section IS qui délimitent la longueur de la section de voie surveillée, un fil de contact FCv1p1 de la section considérée de la voie 1, de polarité positive, et un fil de contact FCv1n1 de la section considérée de cette même voie 1, de polarité négative.

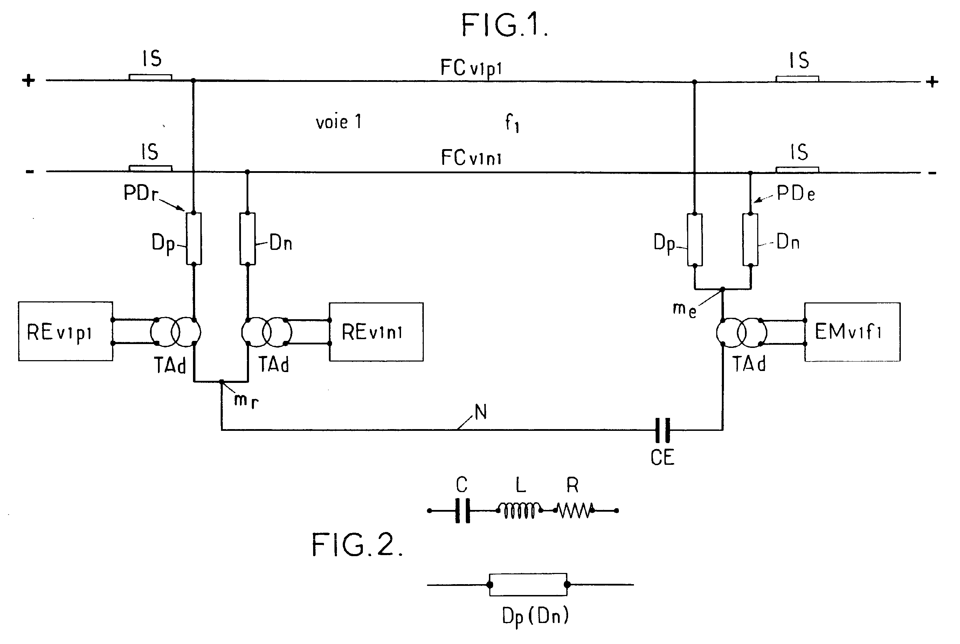

Dp et Dn sont des dipôles, représentés figure 2, constituant les bras de ponts diviseurs, de réception PDr et d'émission PDe, dont les points milieux sont respectivement mᵣ (m-récepteur) et mₑ (m-émetteur). Les Dp sont reliés à la ligne de polarité positive, tandis que les Dn sont reliés à la ligne de polarité négative. Ces ponts permettent d'alimenter en parallèle les deux polarités électriques du système de transport, à partir de leurs points milieux.

EMv1f1 représente un circuit de voie émetteur, engendrant un courant alternatif dont la fréquence est généralement comprise entre quelques milliers de Hz et quelques dizaines de kHz. Cet émetteur alimente la section considérée de la voie 1 à la fréquence f1 et est branché d'un côté sur le point milieu mₑ.

La détection du fil de contact rompu est obtenue en intégrant un récepteur à chacun des bras du pont diviseur de réception PDr, en aval du point milieu mᵣ. De ce fait, un pseudo neutre local N se trouve directement connecté à ce point mᵣ. On a donc deux récepteurs : REv1p1 constituant un circuit de voie récepteur qui assure le contrôle de l'intégrité du FCv1p1 par manque de courant, et REv1n1 constituant un autre circuit de voie récepteur qui assure également le contrôle de l'intégrité du FCv1n1 par manque de courant.

Le pseudo neutre local précité N relie les points milieux mₑ et mᵣ en série avec l'émetteur EMv1f1 et un condensateur CE accordé, à la fréquence de l'émetteur (résonance série), avec l'inductance des fils de contact et du pseudo neutre local N. Ce condensateur a pour fonctions de réduire et d'adapter l'impédance des circuits alimentés par l'émetteur, fonction de la longueur de la section considérée, à la plage des fréquences de conception des circuits de voie retenus.

TAd désigne des transformateurs d'adaptation qui permettent d'éliminer la composante continue au secondaire. En général, le transformateur d'adaptation est intégré aux circuits de voie émetteurs et récepteurs.

L'intérêt de ce schéma est que la différence de potentiel continu entre les points mₑ et mᵣ est pratiquement nulle ou du même ordre de grandeur que la différence de potentiel existant entre les deux files de rails d'une voie ferrée, en un même point kilométrique.

D'autre part, les deux fils de contact FC sont alimentés en parallèle. Si l'on suppose que ces fils ont des caractéristiques identiques et donc des impédances égales, il s'ensuit que la différence de potentiel à la fréquence f1, entre ces deux fils de contact en un même point kilométrique, est nulle ou très faible. En effet, le courant de l'émetteur EMv1f1 se partage entre les deux circuits qu'il alimente en parallèle, respectivement: l'impédance du dipôle Dp du pont émetteur PDe, le FCv1p1, l'impédance du dipôle Dp du pont récepteur PDr et le circuit récepteur REv1p1 d'une part, l'impédance du dipôle Dn du pont émetteur, le FCv1n1, l'impédance du dipôle Dn du pont récepteur PDr et le circuit récepteur REv1n1 d'autre part. Du fait de l'effet de peau intervenant aux fréquences utilisées, l'impédance des fils de contact est peu sensible à l'usure due au captage, qui modifie peu la section annulaire utilisée par ces courants. Compte tenu de la longueur des sections isolées, le calcul montre que l'impédance des fils de contact FC est essentiellement due à l'inductance de ces conducteurs. Ces impédances sont donc pratiquement égales, de sorte que le courant issu de EMv1f1 se partage à égalité entre les deux fils de contact. Les récepteurs REv1p1 et REv1n1 se trouvent ainsi alimentés sous une tension de même valeur.

L'égalité du courant émetteur dans chacun des fils de contact FC présente en outre un second avantage, si l'on remarque que ces courants circulent toujours dans le même sens, dans les deux fils, à un instant donné. En conséquence, la différence de potentiel moyenne fréquence entre les deux fils, prise en un même point kilométrique, est quasiment nulle. De ce fait, ces deux points de contact peuvent être réunis, sans qu'il passe de courant par la liaison. Or, par son captage, chaque trolleybus réalise une liaison entre les deux fils de contact, en un même point kilométrique. On peut donc dire que la circulation des trolleybus ne perturbe pas le fonctionnement du dispositif de détection, d'autant moins que tous les véhicules de construction récente comportent un filtre d'entrée intégrant une inductance de valeur élevée et une inductance de lissage, lesquelles opposent une grande impédance à la circulation des courants de moyenne fréquence.

Revenant à la figure 1, on voit que la rupture d'un des fils de contact, par exemple le FCv1p1, entraîne la coupure du courant moyenne fréquence, ce qui fait chuter le relais du récepteur REv1p1 détectant la rupture du fil positif. Symétriquement, et d'une manière indépendante, la rupture du FCv1n1 entraîne la chute du relais du récepteur REv1n1 détectant la rupture du fil négatif. Selon le schéma électrique de signalisation ferroviaire rappelé plus haut, et facilement transposable par un homme de l'art, la chute du relais d'un récepteur commande l'ouverture des disjoncteurs de protection de la section surveillée, et donne l'alarme du fil rompu. Dans le cas de la figure 1, la commande pourrait concerner les disjoncteurs de protection des deux sous-stations encadrantes, de manière à couper le courant de traction des deux côtés de la rupture. Ces mesures de sécurité seront adaptées par l'exploitant à chaque schéma d'alimentation de la ligne aérienne de contact.

Pour des raisons de sécurité inhérentes à la signalisation ferroviaire, les liaisons entre les récepteurs et les appareils commandés sont du type fil à fil. Les liaisons de l'invention, qui ne sont pas sous les contraintes de la sécurité ferroviaire, peuvent cependant être de tous types connus, incluant les transmissions radioélectriques.

La figure 2 montre que les dipôles Dp et Dn sont chacun constitués par la mise en série d'un condensateur C, d'une inductance L et d'une résistance R. Le condensateur et l'inductance sont accordés sur la fréquence de l'émetteur (résonance série), de manière à réduire l'impédance du dipôle. La résistance R est faible. A la mise sous tension, les résistances R des deux dipôles en série limitent le courant de charge des condensateurs C. Chaque pont diviseur PDe ou PDr peut en effet être soumis à la tension maximale de la ligne, pouvant atteindre 900 V en courant continu. Les valeurs de C, L et R sont adaptées aux circuits de voie retenus et à leur mode de fonctionnement permanent.

Dans la figure 1, les circuits de voie sont dits « à émission extrême ». Si la longueur de ligne à surveiller comprend plusieurs sections isolées, ce schéma peut être reproduit, par translation, pour chacune des sections isolées successives. En effet, les circuits de voie actuels utilisent une gamme de fréquences discrètes dans le but d'éviter toute interférence longitudinale et transversale entre deux voies parallèles.

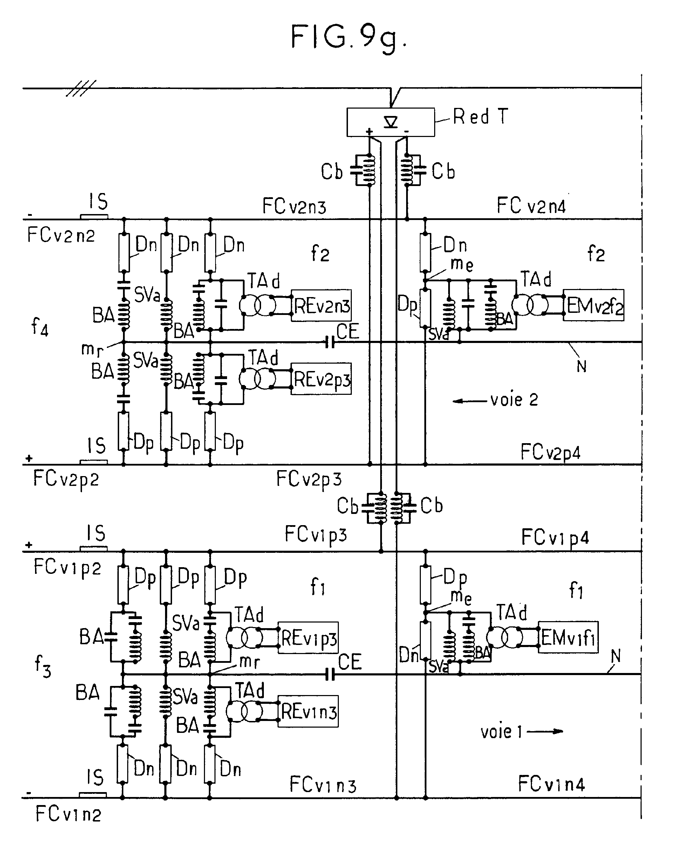

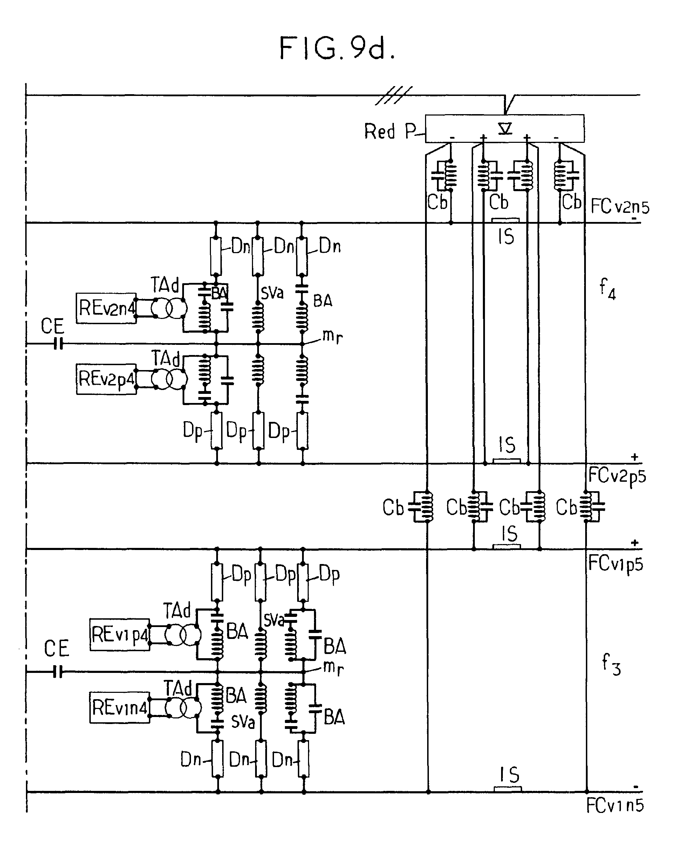

L'intérêt du recours à des circuits de voie est de pouvoir utiliser une autre fréquence pour l'alimentation des sections isolées adjacentes, par exemple f3, de manière que les fréquences successives des émetteurs, soit f1, f3, f1, f3, etc. ne puissent interférer dans le sens longitudinal. Sur une voie 2 parallèle à la voie 1, la conception des circuits de voie permet d'utiliser la série des fréquences f2, f4, f2, f4, etc. comme on le verra figure 9, de manière à éviter toute interférence des circuits les uns sur les autres, aussi bien dans le sens longitudinal sur la voie 2, que dans le sens transversal entre les voies 1 et 2.

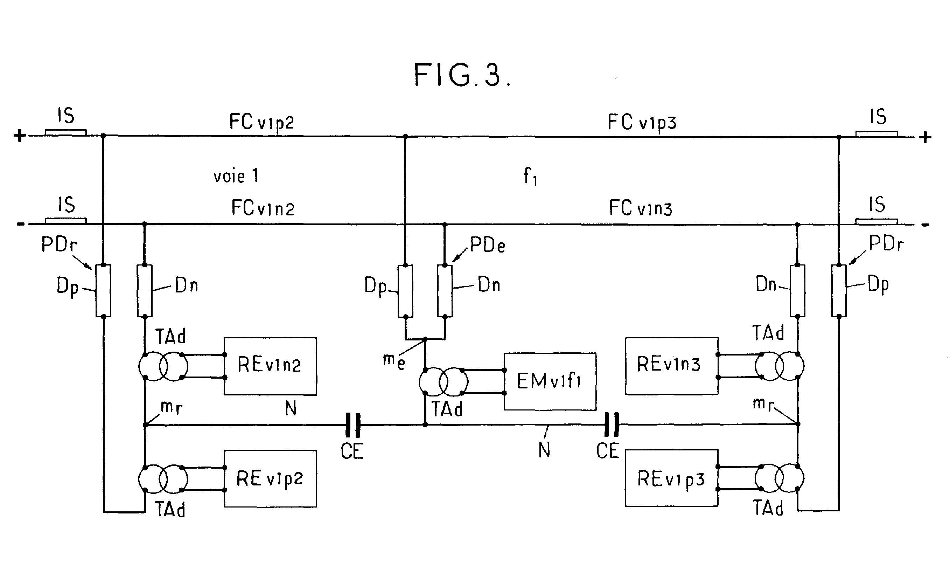

La figure 3 (dans laquelle on a utilisé les mêmes références que sur la figure 1 pour désigner les mêmes éléments ou des éléments analogues ou jouant le même rôle) correspond à la même application trolleybus que la figure 1, mais ce schéma est dit à « émission intermédiaire ». L'émetteur EMv1f1 est en effet placé au centre de la section isolée, en fait entre les récepteurs REv1, car la section peut être divisée en deux parties inégales, et on utilise quatre récepteurs REv1n2, REv1p2, REv1n3 et REv1p3 pour contrôler l'intégrité des fils de contact FC. La plus grande longueur de la section considérée ou certaines particularités de la ligne justifient le recours à ce schéma qui, comparativement au schéma de la figure 1, permet de fractionner chaque fil de contact en deux. La fréquence de l'émetteur reste unique, ce qui permet d'utiliser successivement et à volonté les schémas des figures 1 et 3 sur les deux voies de la ligne, en ayant soin de permuter les fréquences, comme indiqué ci-dessus.

La description relative à la valeur de la différence de potentiel en moyenne fréquence entre les deux fils de contact en un même point, développée à propos de la figure 1, s'applique entièrement aux cas de l'émission intermédiaire représentés aux figures 3 et 9. En effet, le schéma de l'émission intermédiaire se ramène à l'alimentation en parallèle de deux schémas à émission extrême, pour chacun desquels la description ci-dessus s'applique. Le dimensionnement de l'émetteur doit naturellement être adapté à sa charge.

Dans le cas d'une voie ferroviaire, l'emploi du schéma à émission extrême a pour conséquence qu'un émetteur alimente un récepteur. Avec un schéma à émission intermédiaire, un émetteur alimente deux récepteurs. En ce qui concerne la charge de l'émetteur, il est remarquable que ce dernier schéma ferroviaire correspond à celui de la figure 1. Le circuit de voie émetteur est donc, dans le cas de la figure 1, d'un type standard. En revanche, l'émetteur de la figure 3 doit alimenter quatre récepteurs, du fait de la constitution bifilaire de la ligne aérienne de contact. Le dimensionnement de cet émetteur doit donc être adapté à une charge plus importante.

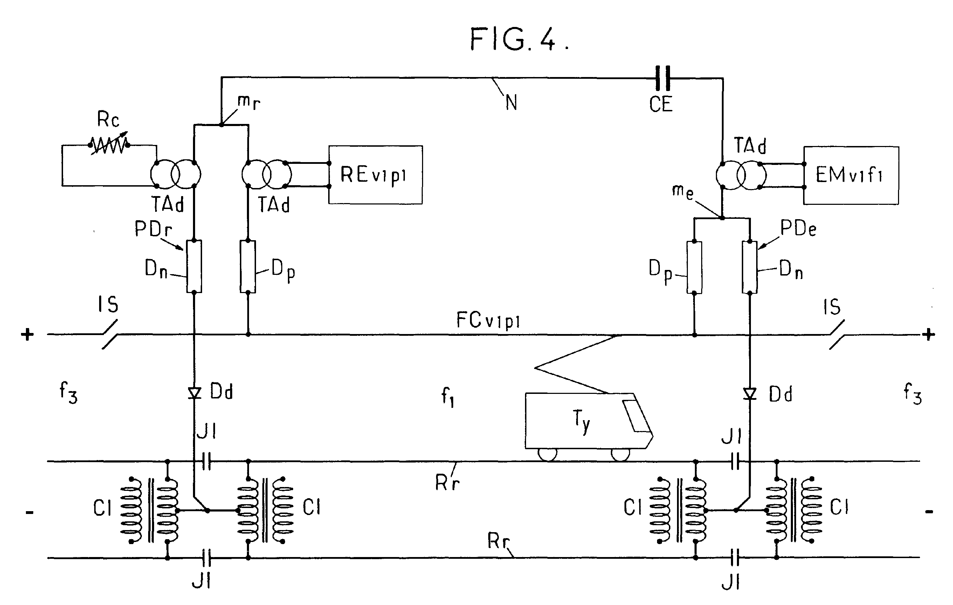

Les particularités du schéma de la figure 4 sont les suivantes : si le fil de contact de polarité positive FCv1p1 n'est pas différent, dans son principe, du fil de contact de même polarité du trolleybus, une différence très importante concerne le « fil » de polarité négative, constitué dans ce cas par les rails de roulement Rr de la voie ferrée du tramway Ty. En effet, la détection de la rupture de ce « fil » n'est pas l'objet de l'invention, car il n'est pas aérien et donc non dangereux.

Les voies ferrées sont équipées de connexions inductives CI reliant les deux Rr et assurant le retour du courant de traction aux sous-stations.

Les ponts diviseurs de l'invention sont donc connectés sur le fil de contact FCv1p1 de polarité positive par l'intermédiaire des dipôles Dp, comme précédemment, et sur le « fil » de polarité négative, soit sur la prise médiane de la connexion inductive correspondante CI, par l'intermédiaire des dipôles Dn. Dans l'exemple de la figure 4, la voie ferrée est représentée avec des joints isolants JI.

Une diode Dd intercalée entre chaque dipôle Dn et le point de connexion du pont diviseur avec la polarité négative située sur la connexion inductive CI a un double rôle : la diode permet au pont diviseur de remplir sa fonction, puisque le courant continu peut parfaitement s'écouler de la polarité positive à la polarité négative, ce qui fixe les potentiels des points milieux mₑ et mᵣ, autorisant ainsi l'établissement du pseudo neutre local N d'une part, mais interdit au courant de l'émetteur de fréquence f1 de se refermer par la voie ferrée Rr, car ce courant rencontre toujours une diode Dd à l'état bloquant sur son trajet, d'autre part. En fait, la perturbation éventuelle de ce courant sur la signalisation de la voie ferrée devrait être nulle, du fait de la connexion des ponts diviseurs, via la diode, sur la prise médiane de la connexion inductive CI. Ces diodes devraient ainsi être inutiles sur les lignes de tramway non équipées d'une signalisation. Il est intéressant de noter que le courant de l'émetteur à la fréquence f1, qui emprunterait le circuit Dp, FCv1p1 et traverserait le tramway ne pourrait se refermer, car il trouverait toujours une diode à l'état bloquant sur son trajet. Il est en outre rappelé que les tramways sont équipés d'un filtre d'entrée et d'une inductance de lissage qui opposeraient une impédance très élevée au courant de l'émetteur. On ne peut donc parler de shuntage, du fait de l'absence de courant moyenne fréquence traversant le tramway. La circulation des tramways ne perturbe donc pas le système de détection de l'invention.

Le schéma ne comporte évidemment qu'un seul récepteur REv1p1 chargé de contrôler l'intégrité du seul fil de contact positif FCv1p1, mais, pour fixer précisément le potentiel du point mᵣ, le second récepteur absent a été remplacé par une résistance de charge Rc présentant une impédance égale.

Il est évident que le courant continu à travers les ponts diviseurs n'atteint une valeur significative que pendant la charge des condensateurs C des dipôles. Ce courant est ensuite très faible, puisqu'il correspond au courant de fuite des condensateurs. Cependant il permet de fixer les potentiels des points mₑ et mᵣ l'un par rapport à l'autre comme dans le cas d'une ligne aérienne de contact de trolleybus, mais aussi par rapport à la terre, par l'intermédiaire de la voie ferrée, dont la tension rail-sol est limitée par la réglementation.

La présence des deux diodes Dd montées tête-bêche pourrait faire douter de l'intérêt des deux liaisons, mₑ - CI d'une part, mᵣ - CI d'autre part, alors que la seule boucle active (émetteur Emv1f1, pseudo neutre local N, récepteur Rev1p1 et fil de contact FCv1p1) semblerait suffisante pour contrôler l'intégrité du fil de contact positif FCv1p1. Cependant toute la boucle serait alors portée au potentiel de la tension d'alimentation de la ligne aérienne de contact, soit jusqu'à 900 V courant continu, ce qui ne correspond pas à la tension d'isolement des circuits de voie et rendrait plus dangereuse la maintenance de ces équipements.

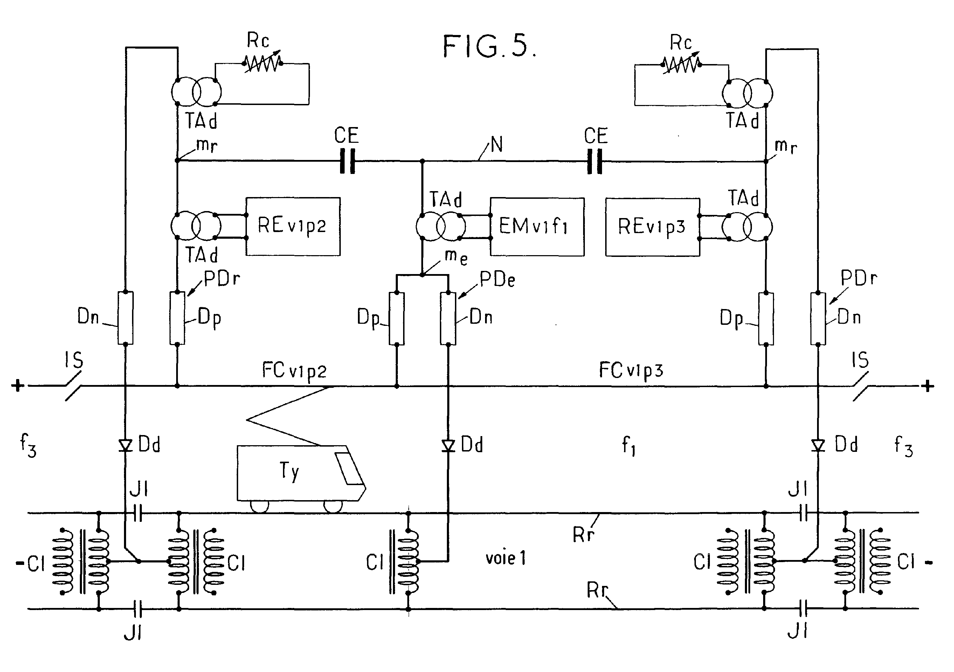

Dans le cas de la figure 5, l'émetteur EMv1f1 est placé au centre de la section isolée, en fait entre les récepteurs REv1p2 et REv1p3, car la section peut encore être divisée en deux parties inégales. Le pont diviseur émetteur PDe est branché exactement comme dans le cas de la figure 4, entre le fil de contact FC et la prise médiane d'une connexion inductive CI branchée entre les deux rails Rr du tramway Ty. Comme ce schéma s'applique plutôt à une section de grande longueur, une connexion inductive du type de celles utilisées sur les voies sans joint isolant, d'un type connu, est implantée au droit du branchement du pont diviseur émetteur. L'émetteur EMv1f1 alimente en parallèle les deux demi sections ainsi créées. Le schéma de l'émission intermédiaire se ramène en effet à l'alimentation en parallèle de deux schémas à émission extrême à partir d'un seul émetteur. Le pseudo neutre local N est défini et alimenté comme dans le cas de la figure 3.

Concernant les câbles d'alimentation de la ligne aérienne de contact depuis les sous-stations, leur surveillance peut être assurée par le schéma de la figure 1 ou par le schéma de la figure 3.

On va maintenant rappeler quelle est d'une part la constitution du sous-système d'alimentation d'une ligne aérienne de contact, afin de prendre en compte les contraintes que pourrait introduire sa conception sur la propagation du courant de l'émetteur, d'autre part la constitution, limitée aux fils de contact, d'un sous-système de ligne aérienne de contact, afin de prendre en compte les contraintes que pourraient introduire sa constitution ainsi que la circulation des véhicules sur la propagation du courant de l'émetteur, et enfin on va décrire les moyens spécifiques à l'invention.

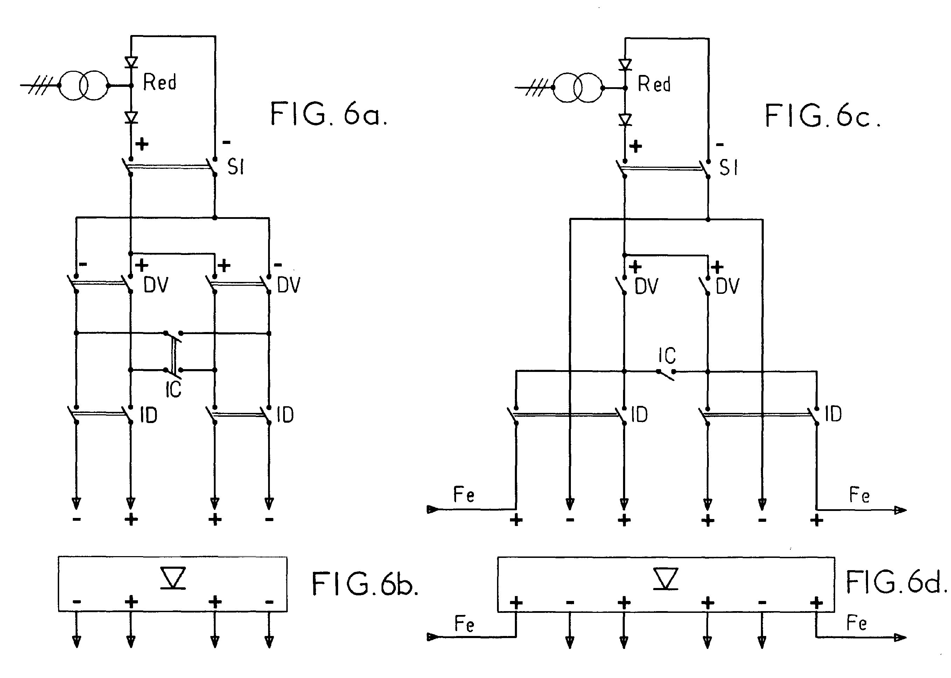

La ligne aérienne de contact d'un trolleybus est alimentée par un certain nombre de sous-stations équipées de redresseurs de puissance Red régulièrement espacés le long de la ligne. Ces redresseurs alimentent la ligne aérienne de contact par l'intermédiaire d'un bloc d'appareillage, ainsi que représenté sur les figures 6a à 6d.

La figure 6a montre que le bloc d'appareillage comporte essentiellement un appareil d'isolement SI, deux appareils de protection DV, un appareil de couplage IC et deux appareils de coupure ID. La figure 6b est une forme simplifiée de la figure 6a, qui sera utilisée figure 9.

Fonctionnellement, il est connu que ces sous-stations se classent en deux types, selon la constitution de la ligne aérienne de contact aux points de connexion. Une ligne aérienne de contact sectionnée impose une sous-station disposant de deux départs par fil de contact, ces départs assurant l'alimentation du fil de contact de part et d'autre du sectionnement. Une ligne aérienne de contact bifilaire impose donc quatre départs. Le schéma de la figure 6a correspond à une ligne aérienne de contact bifilaire sectionnée.

Une ligne aérienne de contact non sectionnée ne nécessite qu'un départ par fil de contact, ce qui simplifie essentiellement le bloc d'appareillage de la sous-station. Ce bloc ne comporte plus qu'un appareil de protection DV et qu'un appareil de coupure ID. L'appareil de couplage IC est naturellement supprimé. Dans ce cas il suffit de deux départs pour alimenter une ligne aérienne de contact bifilaire.

Pour limiter le nombre des appareils de coupure et sécuriser les opérations de maintenance, les lignes aériennes de contact voisines, appartenant aux deux sens de circulation de la même ligne de trolleybus, sont maintenant alimentées en parallèle au départ de la sous-station.

La figure 6a permet de voir que la propagation du courant de l'émetteur est favorisée de trois manières :
- la mise en parallèle des départs, respectivement positifs et négatifs, par les appareils de protection fermés en fonctionnement normal, et par l'appareil de couplage IC lorsque les appareils de protection DV sont ouverts et que la sous-station est hors service, a pour effet de court-circuiter les isolateurs de section IS. Il en résulte que la ligne aérienne de contact n'est pas sectionnée, vue de l'alimentation haute tension continue, c'est-à-dire que tout fil de contact est électriquement continu et est parcouru par le courant d'alimentation d'un bout à l'autre, alors que cette même ligne aérienne de contact est sectionnée, vue du véhicule, dont les moyens de captage rencontrent les isolateurs de section IS au cours de son déplacement. En conséquence et sauf les dispositions particulières indiquées plus bas, le courant de l'émetteur peut se propager librement le long de tout fil de contact, en contournant les isolateurs par le chemin offert par les blocs d'appareillage ;
- en se propageant sur un fil de contact de polarité négative, on voit que le courant de l'émetteur peut traverser le pont redresseur dont les diodes sont normalement passantes pour lui. Le courant se retrouve alors sur un fil de contact de polarité positive. Cette alternance peut ainsi contourner une rupture intervenue sur le fil de contact négatif, en passant par le redresseur et en retournant à l'émetteur en empruntant le fil de contact positif. En revanche, ce cheminement n'est pas possible pour la seconde alternance qui va rencontrer le redresseur à l'état bloquant. Cette seconde alternance pourrait éventuellement rejoindre le fil de contact négatif en passant par les deux bras en série du pont diviseur adjacent. Cependant ses dipôles sont accordés sur la fréquence f3 et offriraient alors une impédance élevée à ce courant. Pour se refermer sur des dipôles accordés sur f1, il faudrait aller au-delà des sections alimentées sous f3, sections qui encadrent la section considérée alimentée sous f1. Ce parcours ajouterait l'impédance des deux fils de contact alimentés sous f3 à l'impédance normale d'un circuit. Le récepteur surveillant l'intégrité du fil de contact rompu pourrait donc être réalimenté par une alternance sur deux. Cette réalimentation du récepteur est insuffisante pour maintenir son relais excité, compte tenu que la tension moyenne est alors égale à 0,45 fois la tension de l'émetteur et que ce relais comporte habituellement un seuil électronique incorporé. Toutefois, pour éviter tout risque de réalimentation susceptible de masquer une rupture de fil de contact, il est possible d'installer un circuit bouchon, d'un type connu, sur tous les câbles d'alimentation reliant la sous-station aux fils de contact de polarité négative. Il est à rappeler que les circuits de voie utilisent une série de fréquences discrètes précisément pour pallier ce genre d'interférence longitudinale, et que les sous-stations d'alimentation des vois ferrées ne sont pas équipées de filtres accordés aux fréquences des circuits de voie. Les sous-stations ne perturbent donc pas le système de détection de l'invention ;
- l'alimentation en parallèle de deux lignes aériennes de contact voisines, au départ de la sous-station, est également une disposition qui favorise le vagabondage du courant de l'émetteur. Ce courant peut en effet passer facilement d'une ligne aérienne de contact à l'autre. Là aussi, pour supprimer toute possibilité d'interférence d'un circuit sur l'autre, il est possible d'installer un circuit bouchon d'un type connu sur tous les câbles d'alimentation reliant la sous-station aux fils de contact d'une même polarité. Les circuits de voie utilisent une série de fréquences discrètes précisément pour pallier ce genre d'interférence transversale, et les sous-stations d'alimentation des voies ferrées ne sont pas équipées de filtres accordés aux fréquences des circuits de voie, malgré la présence des liaisons transversales entre les voies (de polarité négative).

Dans une ligne aérienne de contact bifilaire, chaque fil de contact est composé d'un seul conducteur, et ce conducteur est mécaniquement continu, du fait de la conception du moyen de captage linéaire propre à ce système. La ligne aérienne de contact n'est généralement pas équipée de feeder, du fait que les puissances mises en jeu sont relativement faibles.

Chaque fil de contact comporte des isolateurs de section IS introduisant pour le véhicule une interruption de la continuité électrique du fil de contact, là où ils sont placés. En cohérence avec la commande des sous-stations, ces isolateurs offrent la possibilité d'alimenter la ligne de contact section par section, ou d'isoler une section. Les isolateurs sont généralement placés au droit des sous-stations d'alimentation de la ligne aérienne de contact, mais peuvent également être implantés en pleine ligne. Dans ce dernier cas ils sont surmontés d'un interrupteur d'interconnexion normalement fermé IINF, qui n'est ouvert que pour isoler l'une des sections adjacentes. Cet interrupteur d'interconnexion peut également être normalement ouvert IINO si une différence de potentiel trop élevée risque d'exister à ses bornes, du fait du tracé de la ligne et de son mode d'exploitation, ou pour séparer une zone d'ateliers ou de dépôt de la ligne. L'isolateur est alors d'une conception connue, permettant son franchissement par un véhicule dans les meilleures conditions d'alimentation.

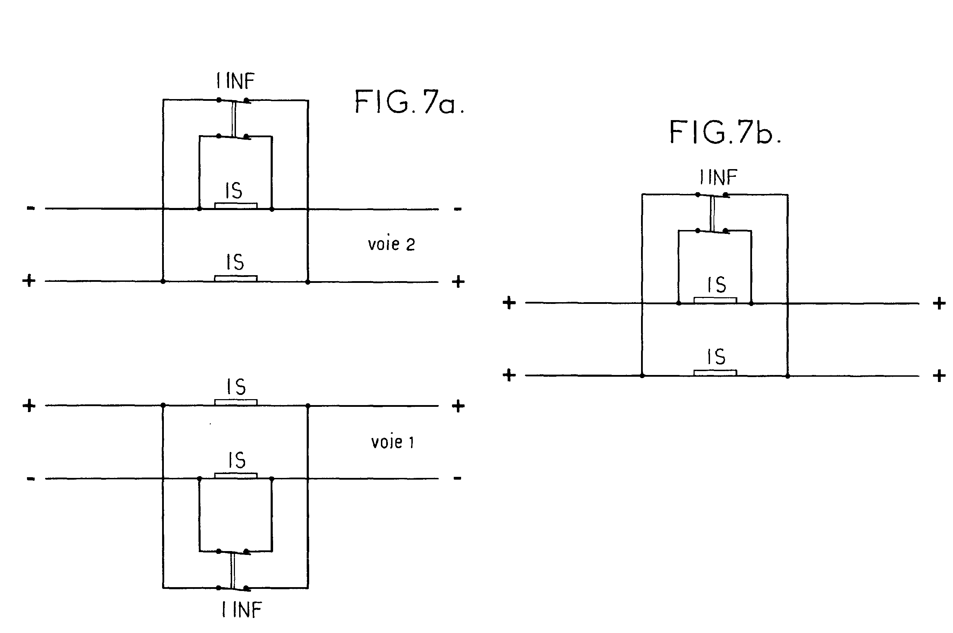

Pour ne pas multiplier le nombre des pôles de l'interrupteur IINF, on retient généralement un appareil bipolaire branché en parallèle sur les fils de contact de même polarité des deux lignes. Cette disposition favorise naturellement le vagabondage du courant des émetteurs, vagabondage que l'on peut contrecarrer en installant un circuit bouchon sur toute liaison entre deux fils de contact, comme indiqué ci-dessus pour l'alimentation en parallèle de deux lignes aériennes de contact voisines. Toutefois il pourrait s'avérer plus économique d'éviter toute connexion électrique entre les deux lignes, ce qui permettrait de supprimer les circuits bouchons. Il suffit pour cela de prévoir un interrupteur bipolaire IINF par voie, comme indiqué sur la figure 7a.

La présence d'un interrupteur d'interconnexion normalement ouvert IINO implanté en pleine ligne fait jouer à l'isolateur un rôle de joint isolant, tant pour le courant de traction que pour le courant de l'émetteur. Cet isolateur délimite alors parfaitement une section isolée.

En dehors des isolateurs de section, la ligne aérienne de contact comporte différents appareils de voie, dont le principal est l'aiguillage. La conception de ces appareils varie selon la manière dont ils sont insérés dans la ligne aérienne de contact, selon leur dispositif de commande et, naturellement, selon les constructeurs. Mais, pour ce qui concerne l'invention, la présence de ces appareils de voie dans une même zone introduit soit un contact électrique entre deux fils, nécessairement de même polarité mais appartenant à deux lignes de trolleybus distinctes, soit une interruption du courant électrique, comme le ferait un isolateur de section, entre deux fils de polarité quelconque. La manière de traiter ces problèmes ne relève que des règles de l'art.

Dans le premier cas, le contact électrique doit être combattu par l'insertion d'un circuit bouchon entre les deux fils, car toute connexion entre deux lignes favoriserait le vagabondage du courant des émetteurs.

Dans le cas de l'interruption, il faut distinguer selon la polarité des fils. Si la polarité est différente, donc + et - , il n'y a rien à faire. Si la polarité est la même, mais que les fils appartiennent à deux lignes de trolleybus distinctes, il n'y a rien à faire non plus. La question se pose réellement si les deux fils de même polarité appartiennent à la même ligne de trolleybus. Soit on a intérêt à traiter le cas comme un isolateur de section, et on ne fait rien, soit on souhaite rétablir la continuité électrique pour les seuls courants de moyenne fréquence de l'émetteur. Dans ce dernier cas, l'interruption peut être shuntée par un circuit connu de faible impédance, comprenant par exemple un condensateur en série avec une inductance, interdisant le passage du courant continu. En effet, l'installation de l'invention ne doit pas perturber le fonctionnement de la ligne aérienne de contact, telle qu'elle a été conçue initialement.

Devant l'impossibilité de traiter convenablement, pour quelque raison que ce soit, le cas d'une courte section isolée introduite par un ensemble d'appareils de voie entre deux fils de même polarité, appartenant à la même ligne de trolleybus, il conviendrait de contrôler séparément cette courte section isolée par l'installation de l'invention. Le recours à des circuits de voie montre là encore tout son intérêt. Certains circuits de voie sont en effet conçus pour qu'un schéma tel que celui représenté à la figure 1 puisse se superposer à lui-même, sans interférence de fonctionnement entre les deux schémas. Un circuit de voie sans joint court contrôle ainsi une courte fraction de la section longue. Les fréquences des émetteurs sont naturellement différentes. C'est en utilisant de tels circuits de voie que de nombreux exploitants de chemins de fer contrôlent l'occupation de passages à niveau.

Avant d'examiner l'application de l'invention au cas des trolleybus, il y a lieu de souligner que l'installation qui en fait l'objet utilise les circuits de voie d'une manière totalement différente de celle utilisée par les chemins de fer. Cette différence tient au fait que les deux files de rails d'une même voie ferroviaire sont parcourues, au même instant, par des courants de direction opposée, car ces deux files sont branchées en série, tandis que les deux fils de contact de l'invention sont branchés en parallèle et sont parcourus, au même instant, par des courants de même direction. Le shuntage du récepteur ferroviaire, nécessairement assuré par une très faible résistance établie entre les deux files de rails (par un véhicule ferroviaire) provoque donc la chute du relais du récepteur, par absence d'une différence de potentiel significative à ses bornes. Or, selon l'installation de l'invention, le relais du récepteur chute par coupure du courant d'alimentation.

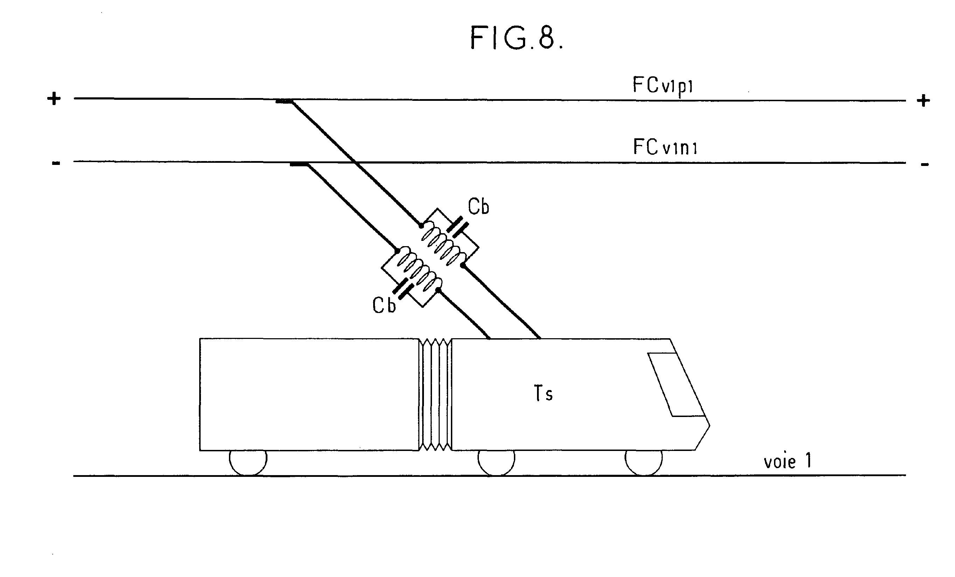

L'invention ne fait absolument pas appel au shuntage du récepteur. Il faudrait en effet pour cela que le shuntage intervienne entre le pseudo neutre N et l'un des fils de contact, ce qui n'est jamais le cas, puisque le captage des trolleybus s'effectue entre les deux fils de contact. En outre, le courant moyenne fréquence traversant le trolleybus devrait être très faible, et ceci pour deux raisons :
- toute connexion établie entre les deux fils de contact en un même point kilométrique est en effet parcourue par un courant extrêmement faible. C'est la conséquence du fait que la différence de potentiel entre les deux fils de contact est pratiquement nulle, si l'impédance linéique des deux fils de contact est la même ;
- l'impédance du trolleybus est élevée, et ceci quel que soit le type de motorisation, car ses inductances de filtrage et de lissage sont placées en série sur le circuit de traction. L'adjonction de circuits bouchons Cb, de conception connue, accordés sur les fréquences des émetteurs de la ligne (deux sens de circulation), pourrait être envisagée sur les véhicules anciens, comme indiqué figure 8. Un essai permettra de vérifier s'il est nécessaire d'équiper ainsi ces véhicules.

La circulation des trolleybus ne devrait donc pas perturber une installation conforme à l'invention. On peut cependant faire l'hypothèse qu'un trolleybus en ligne pourrait permettre au courant de détection de contourner la rupture d'un fil de contact en se refermant par le fil de contact sain. Pour prévenir ce risque, il suffirait d'équiper le trolleybus de circuits bouchons présentant une impédance élevée pour la série des fréquences discrètes utilisées pour les deux sens de circulation de la ligne de trolleybus. Ces circuits bouchons Cb sont schématisés à la figure 8.

L'invention sera encore mieux comprise à la lecture de la figure 9, destinée à illustrer l'installation appliquée aux trolleybus, et à montrer la diversité des réalisations possibles, selon le choix du type de circuit de voie et le schéma retenu.

Vus de l'alimentation à courant continu haute tension, les fils de contact sont continus et sont parcourus par le courant d'alimentation d'un bout à l'autre, comme indiqué précédemment. Il en est de même du courant de l'émetteur, à chaque fois que les isolateurs sont court-circuités. A ce point de vue, les fils de contact sont équivalents à des longs rails soudés.

Cependant les circuits de voie sont dimensionnés pour des rails faiblement isolés de la terre, alors que les fils de contact sont réglementairement très bien isolés de la terre. Cette différence d'isolement doit permettre à ces mêmes circuits de voie de contrôler des sections beaucoup plus longues, ce qui est un avantage de l'invention.

Ce bon isolement est favorable à l'utilisation de tous les circuits de voie connus : circuit de voie à joints isolants, circuit de voie à joints électriques de séparation et circuit de voie sans joint court. L'installation de l'invention se prête également à l'utilisation des deux schémas connus, l'émission extrême et l'émission intermédiaire.

Le choix du type de circuit de voie et du schéma sont donc à faire en fonction des nouvelles possibilités offertes aux circuits de voie par la qualité de l'isolement des fils de contact et en fonction de la longueur de ligne à contrôler :
- circuit de voie à joints isolants pour des sections ponctuelles de courte et moyenne longueurs, par exemple dans le cas d'une ligne dont la plus grande partie serait en site propre et qui ne comporterait que quelques passages en site commun tels que la traversée d'une place, d'un carrefour ou d'un passage à niveau ou zone comprenant des appareils de voie. On équiperait alors les seules parties de ligne empruntant la voirie commune, le danger présenté par la rupture d'un fil de contact sur le parcours en site propre pouvant être jugé acceptable. Les figures 1 et 3 correspondent à ces cas d'application ;
- circuit de voie à joint électrique de séparation pour les sections de grande longueur, sous réserve que les circuits de voie à joints isolants soient moins biens adaptés aux caractéristiques de la ligne à contrôler. Une telle installation fait l'objet de la figure 9 traitant l'ensemble des deux sens de circulation.

La figure 9 représente schématiquement le principe de la détection dans le cas général d'une ligne de trolleybus comprenant les deux sens de circulation, côte à côte dans la même rue, dans laquelle :
- IS sont les isolateurs de section qui délimitent la longueur des deux sections de voie surveillées, soit une section par sens de circulation ;
- la voie 1 représente un sens de circulation ; circulation à droite par exemple, la voie 2 représentant l'autre sens de circulation ;
- les fils de contact FCv1p3 et FCv1p4 représentent le fil de contact positif, et les fils de contact FCv1n3, et FCv1n4 le fil de contact négatif de la voie 1 ;
- les fils de contact FCv2p3 et FCv2p4 représentent le fil de contact positif, et les fils de contact FCv2n3 et FCv2n4 représentent le fil de contact négatif de la voie 2. Selon la normalisation, les fils de contact négatifs sont les fils extérieurs de la nappe, c'est-à-dire les fils qui sont disposés le plus près des trottoirs, les fils positifs étant disposés au centre de la chaussée ;
- RedT représente un redresseur d'alimentation des deux lignes aériennes de contact , du type à ligne aérienne de contact non sectionnée ;
- RedP représente un redresseur d'alimentation des deux lignes aériennes de contact, du type à ligne aérienne de contact sectionnée. Ce redresseur comporte des isolateurs aux points de connexion. Un tel redresseur, non représenté sur la figure, est supposé alimenter les deux lignes aériennes de contact au droit des isolateurs représentés à gauche sur la figure. Les redresseurs RedT et RedP sont deux redresseurs voisins, situés en un point quelconque de la ligne. Les fils de contact appartenant aux deux sens de circulation sont alimentés en parallèle. Chaque connexion est équipée d'un circuit bouchon Cb d'un type connu, pour éviter les interférences longitudinales et transversales entre les émetteurs, comme indiqué précédemment. Le nombre de ces circuits bouchons est naturellement optimisé, selon les branchements réalisés entre la sous-station et la ou les lignes aériennes de contact si les sens de circulation sont ponctuellement disjoints.

Sur chacune des voies, Dp et Dn représentent les dipôles constituant les deux bras des ponts diviseurs émetteurs, dont le point milieu est mₑ. Dp est relié à la polarité positive, tandis que Dn est relié à la polarité négative. Ces ponts permettent d'alimenter en parallèle les deux polarités électriques de chaque voie du système de transport, à partir de leurs points milieux. Pour cet exemple de réalisation, les circuits de voie sont du type à émission intermédiaire et à joints électriques de séparation.

D'une manière connue, un joint électrique de séparation est composé de trois circuits accordés aux fréquences de base des circuits de voie, soit deux blocs d'accord BA et une inductance de voie à air SVa. Naturellement, les circuits de voie successifs fonctionnent sur des fréquences de base différentes (deux fréquences par voie), ce qui conduit à l'utilisation de quatre fréquences de base pour l'équipement des deux voies d'une même ligne de transport, soit par exemple f1 et f3 pour la voie 1 et f2 et f4 pour la voie 2. La conception des blocs d'accord appartenant à un même joint électrique est telle que chaque fréquence utilisée, de part et d'autre du joint, ne peut se propager au-delà de ce joint, qui constitue pour elle un court-circuit. La constitution de ces différents blocs d'accord est mise en évidence sur la figure. Les inductances de voie à air sont surtout utiles au shuntage, qui n'est pas utilisé par l'invention. Mais elles ont été représentées car il s'agit d'un joint électrique de séparation d'un type connu.

Pour la voie 1, l'émetteur EMv1f1 est branché aux bornes du circuit accordé BA par l'intermédiaire d'un transformateur d'adaptation TAd. Ce circuit BA est lui-même branché entre le point milieu m-émetteur mₑ du pont diviseur émetteur et le pseudo neutre local N, selon la description de l'installation faite, par exemple, à propos de la figure 3. Le branchement de l'émetteur EMv2f2 est identique sur la voie 2, la fréquence du courant étant différente, soit f2, pour les raisons indiquées plus haut.

S'agissant d'un circuit de voie à émission intermédiaire et à joints électriques de séparation, l'alimentation en parallèle des deux fils de contact et des deux demi sections placées de part et d'autre de l'émetteur central exige qu'un joint électrique de séparation soit branché, à chaque extrémité de la section isolée, entre le fil de contact et le pseudo neutre local N, d'une manière symétrique par rapport à ce pseudo neutre local. Chaque élément du joint électrique de séparation est placé en série avec un bras du pont diviseur, dont l'autre bras est connecté symétriquement. Comme indiqué dans la description de l'installation, chaque bras est constituée d'un dipôle, soit Dp pour les dipôles connectés sur le fil de contact positif et Dn pour les dipôles connectés sur le fil de contact négatif. Chaque récepteur est branché aux bornes d'un bloc d'accord BA, de préférence aux bornes du bloc fournissant la tension la plus élevée pour la fréquence considérée. Pour la voie 1, les récepteurs sont REv1p3 et REv1p4 pour les fils de contact positifs, REv1n3 et REv1n4 pour les fils de contact négatifs. Pour la voie 2, les récepteurs sont REv2p3 et REv2p4 pour les fils de contact positifs, REv2n3 et REv2n4 pour les fils de contact négatifs.

Comme les émetteurs, les récepteurs sont branchés aux bornes de circuits accordés BA par l'intermédiaire d'un transformateur d'adaptation TAd, selon un montage connu.

Les condensateurs CE ont toujours les mêmes fonctions, comme indiqué avec référence à la figure 1.

Pour les trolleybus en circulation, la rupture d'un fil de contact peut rester longtemps ignorée de l'exploitant. En effet, un véhicule qui se dirige vers le point de rupture reste alimenté par l'amont, jusqu'à ce que cette rupture le contraigne à s'immobiliser par absence de tension sur la ligne. Le conducteur est alors en mesure d'informer sa hiérarchie. Mais, jusqu'à ce point là de son parcours, il peut ne pas être alerté. En revanche, un véhicule qui s'éloigne du point de rupture est constamment alimenté par l'aval et ne se rend compte de rien. Il peut donc s'écouler un temps assez long avant qu'un conducteur ne donne l'alerte. L'installation de détection ultra rapide de l'invention renforce donc la sécurité de toutes les circulations au sol : piétons et véhicules routiers de toute nature, incluant les trolleybus eux-mêmes, en commandant la coupure immédiate de la haute tension et en permettant à l'exploitant d'intervenir immédiatement. C'est l'avantage essentiel de l'invention.

Sur le terrain, l'implantation réelle des moyens mis en oeuvre par l'invention vise à assurer la protection de ces moyens et la stabilité de la tension continue aux bornes des ponts diviseurs, de manière que leur fonctionnement ne soit pas affecté par la rupture d'un fil de contact. Ces moyens seront donc de préférence implantés dans les sous-stations voisines. En se référant à la figure 1, les ponts diviseurs émetteur et récepteur, l'émetteur EMv1f1 et son transformateur TAd associé, le condensateur CE, les récepteurs REv1p1 et REv1n1, et leurs transformateurs TAd associés, sont ainsi installés dans les sous-stations alimentant la ligne aérienne de contact, implantées au droit des isolateurs de section IS se trouvant à chaque extrémité de la section isolée surveillée. Il suffit donc de tirer un seul fil le long de la ligne de trolleybus, par sens de circulation : le pseudo neutre local pour la voie 1 et le pseudo neutre local pour la voie 2, pour être en mesure de mettre en oeuvre l'installation de l'invention sur le terrain. Cette simplicité constitue un autre avantage de l'invention. Pratiquement, on utilisera deux conducteurs de réserve parmi ceux passés par précaution dans le conduit dit multitubulaire, longeant le parcours du trolleybus, sous réserve que les conducteurs voisins soient protégés contre les courants induits de moyenne fréquence.

Dans le cas d'une émission intermédiaire, la partie centrale de l'installation pourra être rapatriée dans le local le plus voisin ou installée en coffret le long de la ligne. En se référent à la figure 9, illustrant l'installation à émission intermédiaire et les joints électriques de séparation, on peut rappeler que les circuits de voie sont conçus pour un environnement ferroviaire et donc pour être installés le long de la voie, en coffret ou rapatriés dans le local le plus proche, la longueur des câbles de connexion (plusieurs centaines de m) étant intégrée dans la conception de ces équipements.

Les circuits bouchons seront également implantés dans les sous-stations, immédiatement en aval des interrupteurs de départ ID.

La description qui vient d'être faite de ce sous-système à propos du trolleybus s'applique avec quelques adaptations au tramway. Il existe en effet deux différences dans la conception de ce sous-système, comme le montre la figure 6c, dérivée de la figure 6a :
- la polarité négative ne comporte pas d'appareils de coupure, conséquence du fait qu'elle est connectée aux rails. Cette polarité est distribuée directement à la voie ferrée dès la sortie de l'appareil d'isolement SI, de la sous-station. Les appareils de protection DV et l'appareil de couplage IC sont donc unipolaires, ce qui simplifie le bloc d'appareillage ;
- en revanche, la ligne aérienne de contact est fréquemment doublée d'un feeder Fe, que les règles de sécurité imposent de traiter comme la polarité positive, en ce qui concerne l'appareillage de coupure. Ce feeder Fe, qui court de sous-station en sous-station, est donc systématiquement protégé par l'appareil ID, qui reste bipolaire.

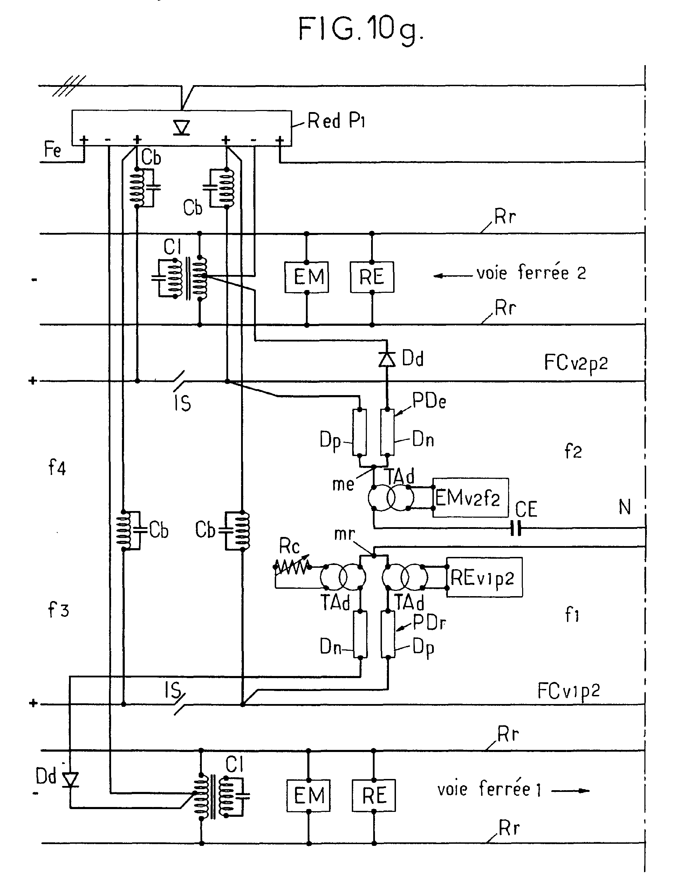

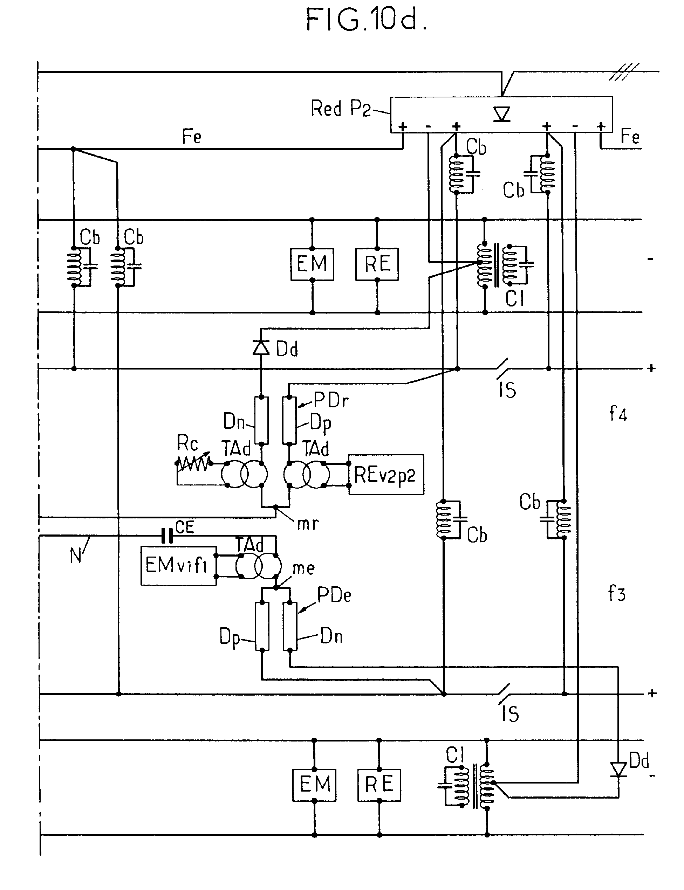

Comme pour les trolleybus, les lignes aériennes de contact voisines, appartenant aux deux sens de circulation de la même ligne de tramway, sont alimentées en parallèle au départ de la sous-station. La figure 6d est une forme simplifiée de la figure 6c, qui sera utilisée figure 10.

Les remarques faites à propos de la figure 6a, en ce qui concerne la propagation du courant de l'émetteur, s'appliquent entièrement à la figure 6c et en conséquence appellent les mêmes remèdes.

Il est rappelé que la ligne aérienne de contact est unifilaire et constitue la polarité positive du sous-système d'alimentation, la polarité négative étant assurée par les rails de roulement. Les rails sont isolés l'un de l'autre pour les besoins de la signalisation ferroviaire et isolés du sol. Mais ces isolations se dégradent avec le temps, surtout en milieu urbain. Le fil de contact est généralement composé d'un seul conducteur mais il arrive qu'il soit constitué de deux conducteurs, pour les raisons de sécurité indiquées précédemment. Une telle constitution ne s'oppose pas à l'application de l'invention, même si l'on suppose qu'un seul des deux conducteurs se rompt, ce qui est l'hypothèse du montage de deux conducteurs côte à côte. Dans ce cas, le second conducteur reste en principe opérationnel. Le système de détection ne fonctionne donc pas, mais cette rupture ne présente pas de danger immédiat, puisque le fil rompu est retenu par le fil sain. En revanche, le système de détection fonctionne si l'ensemble des deux conducteurs est arraché, ce qui est malheureusement la cause la plus fréquente de la rupture de la ligne aérienne de contact.

Le mode de captage par pantographe autorise des discontinuités mécaniques et électriques, en général obtenues par une lame d'air franchissable par le véhicule, sans coupure de son alimentation. Cette lame d'air peut être ménagée au montage, par écartement des fils de contact successifs ou par interposition d'un isolateur de conception adaptée à un mode de captage par balayage horizontal. Par simplicité, il sera toujours fait mention d'isolateur, quel que soit le mode de réalisation de cet appareil. La ligne aérienne de contact est souvent équipée d'un feeder Fe, du fait que les puissances mises en jeu peuvent devenir importantes. Sur le plan électrique, le feeder est rigoureusement sectionné au niveau du bloc d'appareillage, comme le fil de contact auquel il est régulièrement connecté. Les sections successives du Fe sont ainsi interconnectées par les interrupteurs de départ ID, qui doivent également être ouverts lorsqu'une section de ligne aérienne de contact est isolée, sous peine de propager involontairement la haute tension continue.

Comme dans le cas de la ligne aérienne de contact de trolleybus, ces isolateurs sont généralement placés au droit des sous-stations d'alimentation de la ligne aérienne de contact, mais peuvent également être implantés en pleine ligne. Dans ce dernier cas ils sont surmontés d'un interrupteur d'interconnexion normalement fermé IINF qui n'est ouvert que pour isoler l'une des sections adjacentes, comme visible sur la figure 7b. Cet interrupteur d'interconnexion peut également être normalement ouvert IINO pour séparer une zone d'ateliers ou de dépôt de la ligne.

Toutes les remarques et précautions mentionnées plus haut, à propos de la ligne aérienne de contact de trolleybus, s'appliquent à la ligne aérienne de contact de tramway, en particulier l'installation des circuits bouchons destinés à interdire une circulation incontrôlée du courant de l'émetteur.

La caractéristique technique principale d'une installation conforme à l'invention appliquée aux tramways reste naturellement la même, ainsi que le dispositif de mise en oeuvre des circuits de voie. L'installation est simplement adaptée au cas d'une ligne aérienne de contact unifilaire, comme l'ont montré les figures 4 et 5.

Dans la figure 10, la référence IS désigne les isolateurs de section qui délimitent la longueur des deux sections de voie surveillées, soit une section par sens de circulation ; la voie 1 représente un sens de circulation , par exemple à droite, et la voie 2 représente l'autre sens de circulation. Le fil de contact FCv1p2 est le positif de la voie ferrée 1, constituant elle-même la polarité négative. Celle-ci comporte des connexions inductives CI d'un type connu, assurant le retour du courant de traction à la sous-station. Selon le mode d'exploitation, la voie est équipée de sa signalisation propre, composée par exemple de circuits de voie audiofréquence, à joints électriques de séparation et à modulation numérique codée, d'un type connu. Un joint électrique de séparation est dans ce cas constitué de deux blocs d'accord, l'un alimenté par un émetteur EM, l'autre alimentant un récepteur RE.

Le fil de contact FCv2p2 est le positif de la voie 2, constituant elle-même la polarité négative et équipée, comme la voie 1, de connexions inductives et de sa signalisation propre.

RedP1 et RedP2 sont les deux redresseurs d'alimentation, du type à ligne aérienne de contact sectionnée, encadrant les sections isolées surveillées. Conformément aux règles de la technique ferroviaire, la voie ferrée n'est pas sectionnée. La polarité négative est donc électriquement continue ; la polarité positive est seule sectionnée. Ces redresseurs sont représentés sous la forme simplifiée de la figure 6d. Les fils de contact appartenant aux deux sens de circulation sont alimentés en parallèle, et cette alimentation est renforcée par un feeder Fe. Chaque connexion entre la sous-station ou le feeder Fe et les fils de contact est équipée d'un circuit bouchon Cb pour éviter les interférences longitudinales et transversales entre les émetteurs, comme indiqué précédemment.

L'installation de détection représentée étant à émission extrême, chaque sens de circulation est équipé similairement à la figure 4. Les ponts diviseurs sont connectés sur le fil de contact de polarité positive par l'intermédiaire du dipôle Dp, et sur le « fil » de polarité négative, soit sur la prise médiane de la connexion inductive CI de la voie par l'intermédiaire du dipôle Dn. La voie ferrée est ici représentée sans joint isolant, comme le sont les voies actuelles, le plus souvent équipées de longs rails soudés. Les sections sont alors « isolées » par des joints électriques de séparation constitués comme indiqué ci-dessus.

On retrouve une diode Dd intercalée entre le dipôle Dn et le point de connexion de chaque pont diviseur avec la polarité négative située sur la connexion inductive CI. Cette diode assure les même rôles : d'une part permettre au pont diviseur de remplir sa fonction, puisque le courant continu peut parfaitement s'écouler de la polarité positive à la polarité négative, ce qui fixe les potentiels des points milieux m-émetteur mₑ et m-récepteur mᵣ, autorisant ainsi l'établissement du pseudo neutre local N, et d'autre part interdire au courant de l'émetteur de moyenne fréquence de se refermer par la voie ferrée.

Les émetteurs utilisent quatre fréquences, soit deux par voie : EMv1f1 et EMv1f3 (non représenté) pour la voie 1, EMv2f2 et EMv2f4 (non représenté) pour la voie 2.

Le schéma ne comporte évidemment qu'un seul récepteur par sens de circulation, soit REv1p2 chargé de contrôler l'intégrité du seul fil de contact positif FCv1p2 de la voie 1, et Rev2p2 chargé de contrôler l'intégrité du seul fil de contact positif FCv2p2 de la voie 2. Mais, pour fixer précisément le potentiel du point milieu m-récepteur, le second récepteur absent a été remplacé par une résistance de charge Rc présentant une impédance égale.

Le condensateur CE a toujours pour fonctions de réduire l'impédance du circuit alimenté par l'émetteur et d'adapter cette impédance à la longueur de la section de voie surveillée.

Comme dans le cas du trolleybus, la parfaite isolation du fil de contact allonge considérablement la portée des circuits de voie.

En adoptant les mêmes schémas que pour le tramway, on pourrait se limiter à contrôler l'intégrité du seul fil de contact positif d'une ligne aérienne de contact de trolleybus.

On va maintenant décrire le mode de commande des disjoncteurs de protection des sous-stations d'alimentation de la ligne aérienne de contact.

Les disjoncteurs dont l'ouverture doit être commandée par la détection de la rupture d'un fil de contact ou d'un conducteur d'alimentation de la ligne aérienne de contact sont les appareils de protection notés DV, représentés à la figure 6a pour le trolleybus et à la figure 6c pour le tramway. Cette commande s'applique au moins aux deux sous-stations encadrantes et concerne les départs alimentant la section isolée en défaut.

Une installation conforme à l'invention peut être utilisée dans tous les centres urbains équipés d'un système de transport collectif à traction électrique et captage du courant par ligne aérienne de contact, à chaque fois que la ligne aérienne de traction électrique traverse un site commun à la circulation des piétons, des véhicules automobiles et des transports collectifs de type trolleybus, tramway ou chemin de fer à traction électrique.

Grâce à la coupure immédiate du courant de traction en cas de rupture et de chute sur la chaussée d'un fil aérien de contact ou d'alimentation de la ligne aérienne, l'installation objet de l'invention renforce considérablement la sécurité d'exploitation des systèmes de transport urbain. Le renforcement de la sécurité d'exploitation est à son tour un facteur de développement de ces systèmes de transport, systèmes qui améliorent la qualité de service aux usagers, respectent l'environnement et sont un facteur d'économies pour la collectivité.

L'installation fait appel à des circuits de voie, qui sont des composants connus de la signalisation ferroviaire.

## Revendications

1. Installation pour la détection de la rupture de l'un au moins des fils de contact d'une ligne aérienne de traction électrique reliée à une alimentation en courant continu à haute tension, en particulier pour véhicule urbain à traction électrique utilisant deux fils de contact reliés respectivement aux deux polarités de l'alimentation et roulant sur pneus tel qu'un trolleybus (Ts), ou utilisant un fil de contact relié à la polarité positive de l'alimentation et roulant sur une voie ferrée (Rr) tel qu'un tramway (Ty), cette ligne étant divisée en sections séparées par des isolateurs de section (IS) disposés de distance en distance sur chaque fil de contact, chacune de ces sections étant alimentée par l'une au moins d'un ensemble de sous-stations d'alimentation de la ligne aérienne de traction électrique, installation **caractérisée en ce qu'**elle comprend au moins un émetteur (EM) de courant alternatif moyenne ou audio fréquence relié par une borne (mₑ) aux fils ou fil de contact (FC) de ladite ligne, et au moins un récepteur (RE) relié d'une part aux fils ou fil de contact (FC) à proximité d'une extrémité de la section considérée, d'autre part, par une autre borne (mᵣ) et une ligne de pseudo neutre (N), à l'autre point de connexion dudit émetteur (EM), et **en ce que** chaque récepteur (RE) est agencé pour couper l'alimentation de ladite section considérée en courant continu haute tension à partir de la ou des sous-stations d'alimentation correspondantes lorsque ce récepteur (RE) détecte la coupure du courant alternatif dans la liaison émetteur (EM) - fil de contact (FC) - récepteur (RE) - pseudo neutre (N).

2. Installation selon la revendication 1 appliquée à un véhicule urbain à traction électrique tel qu'un trolleybus (Ts), **caractérisée en ce que** les émetteurs (EM) sont reliés chacun aux deux fils de contact (FC) de la ligne aérienne par l'intermédiaire de ponts diviseurs émetteurs (PDe) possédant chacun deux bras (Dp, Dn) reliés d'une part respectivement aux polarités positive et négative de ladite ligne aérienne et d'autre part l'un à l'autre par un point milieu constituant ladite borne (mₑ), et **en ce que** les récepteurs (RE) sont reliés chacun aux deux fils de contact (FC) de la ligne par l'intermédiaire des deux bras (Dp, Dn) de ponts diviseurs récepteurs (PDr), ces récepteurs (RE) étant reliés l'un à l'autre par un point milieu constituant ladite autre borne (mᵣ).

3. Installation selon la revendication 1 appliquée à un véhicule urbain à traction électrique tel qu'un tramway (Ty), **caractérisée en ce que** les émetteurs (EM) et récepteurs (RE) sont reliés chacun au fil de contact (FC) de la ligne par un premier bras (Dp) de ponts diviseurs respectivement émetteur et récepteur (PDe, PDr), ces ponts diviseurs possédant chacun un second bras (Dn) par l'intermédiaire desquels ils sont reliés à la voie ferrée (Rr), et les bras (Dp, Dn) de chaque pont étant par ailleurs reliés l'un à l'autre par un point milieu constitué respectivement par lesdites bornes (mₑ et mᵣ) permettant la constitution entre elles du pseudo neutre (N) qui les relie.

4. Installation selon la revendication 3, **caractérisée en ce que** chacun desdits seconds bras (Dn) des ponts diviseurs est relié à la voie ferrée par l'intermédiaire de la prise médiane d'une connexion inductive (CI) reliant les deux rails (Rr) de la voie, cette liaison comprenant une diode (Dd) permettant la circulation du courant continu dans ledit pont diviseur émetteur (PDe).

5. Installation selon la revendication 3 ou 4, **caractérisée en ce que** le second bras (Dn) du pont diviseur récepteur (PDr) comprend une impédance de charge variable (Rc) destinée à l'équilibrage du pont.

6. Installation selon l'une quelconque des revendications 2 à 5, **caractérisée en ce que** les bras (Dp, Dn) des ponts diviseurs (PDe, PDr) sont constitués chacun d'un dipôle comprenant le montage en série d'une résistance (R), d'un condensateur (C) et d'une inductance (L), le condensateur et l'inductance étant accordés sur la fréquence de l'émetteur (EM) de manière à réduire l'impédance du dipôle, la résistance (R) étant faible.

7. Installation selon l'une quelconque des revendications précédentes, **caractérisée en ce que** ledit pseudo neutre (N) comprend un condensateur (CE) propre à réduire l'impédance du circuit alimenté par l'émetteur (EM) et à l'adapter à la longueur de la section de ligne contrôlée.

8. Installation selon l'une quelconque des revendications précédentes, **caractérisée en ce qu'**elle comporte pour chaque section de voie un émetteur (EM) et au moins un récepteur (RE) connectés à deux extrémités opposées de la section de voie, pour une émission dite extrême.

9. Installation selon l'une quelconque des revendications 1 à 7, **caractérisée en ce qu'**elle comporte pour chaque section de voie un émetteur (EM) connecté à proximité du milieu d'une section de voie, et au moins deux récepteurs (RE) connectés à deux extrémités opposées de cette section de voie, pour une émission dite intermédiaire.

10. Installation selon l'une quelconque des revendications précédentes, **caractérisée en ce que** les sections de voie isolées adjacentes d'une même voie sont alimentées par des émetteurs à fréquences différentes, notamment alternées (f1, f3, f1, f3 ...) pour éviter toute interférence longitudinale entre sections voisines.

11. Installation selon l'une quelconque des revendications précédentes, **caractérisée en ce que** les sections de voie isolées adjacentes d'une voie parallèle à la voie considérée sont alimentées par des émetteurs à fréquences (f2, f4, f2, f4 ...) différentes de celles (f1, f3, f1, f3 ...) des émetteurs de ladite voie considérée pour éviter toute interférence transversale entre sections voisines.
